# EUROPÄISCHE PATENTANMELDUNG

(11) **EP 1 431 027 A1**
(43) Veröffentlichungstag der Anmeldung: **23.06.2004**
(21) Anmeldenummer: 02028400.6
(22) Anmeldetag: 18.12.2002
(51) Int. Cl.: B32B 17/10, C09K 21/02

(54) **Brandschutzmittel und Verfahren zu seiner Herstellung**

(71) Anmelder: Scheuten Glasgroep, 5900 AA Venlo (NL)
(72) Erfinder: Meyer, Gerhard, Dr., 46483 Wesel (DE); Villari, Valentino, Dr., 41063 Mönchengladbach (DE); Roth, Tobias, 45768 Marl (DE); Wirth, Nikolas, 48249 Dülmen (DE); Püttmann, Christian, Dr., 48249 Dülmen (DE); Fenner, Thomas, 46535 Dinslaken (DE); Hendrikx, Paul, 5802 LE Venray (NL)
(74) Vertreter: Jostarndt, Hans-Dieter, Dr. Dipl.-Phys.

(57) **Zusammenfassung**

Brandschutzmittel zur Einbettung in ein Bauelement. Erfindungsgemäß zeichnet sich das Brandschutzmittel dadurch aus, dass es wenigstens ein hybrides Foliensystem umfasst, bei dem wenigstens eine Folie mit intumeszierendem Material beschichtet ist.

Die Erfindung betrifft ferner ein Verfahren zur Herstellung des Brandschutzmittels und eine, das Brandschutzmittel enthaltende Verglasungseinheit.

## Beschreibung

Die Erfindung betrifft ein Brandschutzmittel und ein Verfahren zu seiner Herstellung.

Die Erfindung betrifft ferner die Verwendung des Brandschutzmittels in einer Brandschutzverglasungseinheit.

Zur Herstellung von Brandschutzverglasungen ist es bekannt, intumeszierende Materialien einzusetzen, welche innerhalb einer Verglasungseinheit mit wenigstens zwei Glasscheiben eine transparente Zwischenschicht bilden, die im Brandfall aufbläht. Beim Aufblähen der Schicht wird eine erhebliche Energiemenge der auftreffenden Hitze von dem in der Schicht enthaltenen Wasser aufgenommen, wodurch das Wasser zum Verdampfen gebracht wird. Nach Verdampfung des Wassers bildet sich ein schaumartiger Hitzeschild, der im weiteren Brandverlauf die Hitzeisolation gegenüber der hinter der Brandschutzschicht liegenden Glasscheibe und einem zu schützenden Raum übernimmt.

Es ist bekannt, derartige Brandschutzschichten durch Hydrogele zu bilden. Hauptbestandteil dieser Hydrogelschichten ist herkömmlicherweise Wasser mit Zumischungen von Salzen und stabilisierenden Polymeren. Die stabilisierenden Polymere dienen dabei als Gelbildner. Eine derartige Brandschutzschicht, bestehend aus einem Hydrogel, ist beispielsweise in der Deutschen Patentschrift DE 35 30 968 beschrieben. Die wässrige Phase des Hydrogels besteht dabei aus etwa 70 bis 90% Wasser und etwa 10 bis 30% eines wasserlöslichen Salzes. Dem Gel wird ferner zur Verhinderung der Korrosion eines metallischen Abstandsrahmens zwischen den beiden Glasscheiben der Verglasung eine wasserlösliche, eine Korrosion verhindernde Substanz zugesetzt.

Aus der Deutschen Offenlegungsschrift DE 195 25 263 ist ebenfalls eine Brandschutzschicht, bestehend aus einem Hydrogel, bekannt. Die gelbildende feste Phase besteht dabei aus einem Polymer in Form eines vernetzten Polyvinylalkohols.

Zur Anwendung können ferner Brandschutzmischungen kommen, die zu Wasserglas gebundenes Wasser, wenigstens ein Cellulose-Derivat und zweckmäßigerweise Konservierungsmittel aufweisen. Das Konservierungsmittel kann beispielsweise aus der Gruppe Kupfersulfat, Kupferacetat, Benzoesäure oder Mischungen davon ausgewählt werden.

Bei den bekannten Herstellungsverfahren für intumeszierende Schichten für Brandschutzverglasungen erfolgt das Aufbringen des Materials in die Verglasung vorzugsweise durch Aufguss- bzw. Gel- und Gießharzverfahren, bei denen das betreffende Material zwischen zwei auf Abstand gehaltene Scheiben gebracht wird.

Bei Aufgussverfahren wird das intumeszierende Material auf eine Scheibe aufgegossen, woraufhin die zweite Scheibe darüber angebracht wird. Ein derartiges Verfahren ist beispielsweise in der Deutschen Offenlegungsschrift 44 35 843 beschrieben. Dabei wird auf eine waagerecht liegende Glasscheibe ein aus Kitt geformter Ablaufschutzrand aufgebracht, woraufhin auf die Glasplatte eine Brandschutzlösung aufgegossen wird. Das Wasser der Lösung wird durch Trocknungsprozesse entfernt, so dass sich die Schicht zu einer festen Brandschutzschicht verfestigt.

Herkömmliche Aufgussverfahren weisen jedoch verschiedene Nachteile auf. Zur Vermeidung von großen Dicke- und Feuchtegradienten über das Blatt ist beispielsweise ein zeitaufwändiges Justieren der Glasplatten erforderlich. Dies ist insbesondere bei großen Platten ein schwerwiegendes Problem, weil die Handhabung der Glasplatten generell sehr schwierig ist. Beim Trocknen der aufgebrachten Materialien ergeben sich ferner inhomogene Trocknerzustände, die durch Inhomogenitäten in der chemischen Zusammensetzung und der daraus resultierenden physikalischen Eigenschaften in x-, y- und z-Richtung zu nicht unerheblichen Qualitätsproblemen und schlechtem Brandverhalten führen. Die verwendeten Trockner legen zudem die Abmessungen der behandelbaren Platten fest, so dass nur eine sehr eingeschränkte Wahl von Plattengrößen möglich ist. Die Variation der Zusammensetzung des Funktionsmaterials ist ebenfalls eingeschränkt, da der Trocknungsprozess sehr empfindlich ist. Der Trocknungsprozess selbst ist zudem sehr langwierig und schwer kontrollierbar.

Das intumeszierende Brandschutzmaterial kann auch in eine bereits zusammengefügte Doppelglasscheibe gegossen werden, bei der zwei Scheiben vorzugsweise über einen rahmenförmigen Halter auf Abstand positioniert sind. Der sich so bildende Zwischenraum wird mit dem entsprechenden Material ausgegossen. Dies wird beispielsweise in der Deutschen Offenlegungsschrift DE 195 25 263 beschrieben. Die bereits erwähnte Deutsche Offenlegungsschrift DE 35 30 968 beschreibt ebenfalls ein Verfahren zum Einbringen von fließfähigem Brandschutzmaterial zwischen zwei vorgespannte Silikatglasscheiben, die über einen Abstandsrahmen miteinander verbunden sind. Der Abstandsrahmen ist zweckmäßigerweise mit den Glasscheiben verklebt und Hohlräume mit Klebedichtmasse wie Kitt abgedichtet.

Die bekannten Gel- und Gießharzverfahren weisen diverse Nachteile auf. Beispielsweise ist lediglich eine Endmaßfertigung möglich, da nur in vorgefertigte Doppelverglasungen mit Rahmen bestimmter Abmaße gegossen werden kann. Die Konstruktionen sind oftmals sehr dick und weisen ein hohes Gewicht auf. Bei dünneren Schichten bestehen außerdem Probleme bei der Dickentoleranz über größere Abmaße. Durch die Fließfähigkeit des Gels ergeben sich ferner Ausbuchtungen, oder es erfolgt sogar eine Delamination zwischen Gel und Scheibe. Ein großes Problem stellt ferner der Randverschluss dar, der erforderlich ist, um den Bereich des eingegossenen Gels zu begrenzen. Zum Teil treten zudem Toxizitätsprobleme mit dem Brandschutzmaterial bzw. mit Brandentstehungsprodukten auf.

Es besteht daher der Bedarf nach einem Verfahren zur Herstellung von Brandschutzschichten, bei dem die genannten Nachteile nicht auftreten. Eine wesentliche Verbesserung besteht darin, Brandschutzschichten losgelöst von der Verglasungseinheit herzustellen, in die sie später eingebracht werden soll.
Die Deutsche Patentschrift DE 28 15 900 offenbart beispielsweise ein Verfahren zum Herstellen einer festen Schicht eines intumeszenten Materials, das wasserhaltige oder hydratisierte Metallsalze umfasst, bei dem das Fluidmaterial in eine Form gegossen wird, in der es aushärtet. Die Form wird jedoch zum Aushärten in eine Trockenkammer eingebracht, so dass auch hier die bekannten Nachteile von Trocknungsprozessen auftreten.

In der Deutschen Patentschrift DE 27 52 543 wird ein Verfahren zur Herstellung einer lichtdurchlässigen feuerhemmenden Glasplatte mit wenigstens einer festen Schicht aus hydratisiertem Natriumsilikat beschrieben, wobei die Schicht sandwichartig zwischen zwei Glasscheiben eingeschlossen ist. Die intumeszierende Schicht kann beispielsweise auf der Glasscheibe ausgebildet, als eigene Folie vorgesehen sein oder aus mehreren Schichten bestehen. Wie eine derartige Folie hergestellt wird, wird in dieser Patentschrift nicht beschrieben.

Aus der Deutschen Patentschrift DE 35 09 249 ist ein Verfahren zur Herstellung einer transparenten Feuerschutzplatte bekannt. Das Verfahren beinhaltet, dass eine wässrige Lösung eines blähbaren Materials auf einen Träger aufgetragen wird, diese Schicht durch Wärmezufuhr bis auf einen Restwassergehalt von 20-48 Gew.% getrocknet wird und das so erhaltene blähbare Material als mindestens eine Schicht auf wenigstens eine Verglasungsscheibe aufgebracht wird. Als Träger wird eine rotierende Trommel verwendet, von der die getrocknete Schicht des blähbaren Materials mit einer Rakel entfernt wird. Der Wassergehalt kann so eingestellt werden, dass die gewünschte Viskosität erreicht wird.

Es ist ferner bekannt, nicht transparente Folien zum Gebrauch in Gebäuden so auszugestalten, dass sie eine brandhemmende Wirkung haben. Die Europäische Patentschrift EP 0 492 977 beschreibt beispielsweise eine Brandbarriere in Form eines Tuches oder Vorhangs, bestehend aus einem Glasfasergewebe, welches mit einem intumeszierenden Material beschichtet ist.

Die Internationale Patentanmeldung WO 96/03854 beschreibt ein wärmedämmendes intumeszierendes Beschichtungssystem, das ein Substrat vor Feuer schützt. Dabei wird eine erste Schicht aufgebracht, die im Brandfall thermisch zersetzbar ist und eine erste karbonisierte, intumeszierende und starre Schaumschicht bildet. Eine zweite aufgebrachte Schicht ist ebenfalls thermisch zersetzbar und bildet eine karbonisierte, intumeszierende Schaumschicht, die isolierend wirkt. Die Dichte der isolierenden Schicht ist halb so groß wie die Dichte der ersten Schicht.

Die bekannten Verfahren zur Herstellung einer Brandschutzschicht, bei der die Herstellung von der Verglasungseinheit losgelöst ist, eignen sich jedoch nur schlecht zur Weiterverarbeitung der hergestellten Brandschutzschicht. Dies umfasst beispielsweise den Transport, die Lagerung und das Laminieren in Verglasungseinheiten.

Aufgabe der Erfindung ist es, ein Brandschutzmittel bereitzustellen, das sich gut transportieren, lagern und laminieren lässt, wobei das Brandschutzmittel so beschaffen ist, dass es eine hohe Brandschutzfestigkeit mit einer vielseitigen Einsetzbarkeit in verschiedenen Umgebungen vereinigt.

Aufgabe der Erfindung ist es ferner, ein Verfahren zur Herstellung des Brandschutzmittels bereit zu stellen.

Erfindungsgemäß wird diese Aufgabe dadurch gelöst, dass das Brandschutzmittel wenigstens ein hybrides Foliensystem umfasst, bei dem wenigstens eine Folie mit intumeszierendem Material beschichtet ist.

Die Aufgabe wird ferner dadurch gelöst, dass das Brandschutzmittel als hybrides Foliensystem in einem kontinuierlichen Verfahren hergestellt wird.

*Die Aufgabe wird ferner durch ein Brandschutzmittel, zur Einbettung in ein Bauelement, gelöst, bei dem das Brandschutzmittel mindestens zwei mindestens in Teilen transparente chemisch unterschiedlich zusammengesetzte Folien bzw*.

*Folienschichten enthält, wobei wenigstens eine der Schichten feuerhemmend ausgestaltet ist*.

*Die Aufgabe wird ferner auch durch ein Brandschutzmittel, gegebenenfalls zur Einbettung in ein Bauelement, gelöst, dass nach einem kontinuierlichen, kaskadierenden Verfahren herstellbar ist, bei dem zunächst eine Folie oder Folienschicht A ausgebracht wird und auf diese eine weitere Folie oder Folienschicht B aufgetragen wird, sowie gegebenenfalls eine weitere*/*weitere Folien und*/*oder Folienschicht*/*en C aufgetragen wird*/*werden, dadurch gekennzeichnet, dass mindestens zwei der Folien Folienschichten A, B und C chemisch unterschiedlich zusammengesetzt sind, und mindestens eine der Folienschichten A, B oder C feuerhemmend ist.*

*Unter feuerhemmend versteht man im Sinne dieser Erfindung eine Schicht oder Folie, die in der Lage ist, die Energie eines Feuers zum Schutze dahinterliegender Bauteile oder Gebäudeteile aufzunehmen.*

Zur weiteren Verbesserung der mechanischen Eigenschaften des Brandschutzmittels ist es vorteilhaft, dass das Foliensystem wenigstens eine Schicht mit hoher Elastizität aufweist.
Zur weiteren Verbesserung der mechanischen Eigenschaften des Brandschutzmittels und zur Vereinfachung seines Einbringens in verschiedene Umgebungen ist es zweckmäßig, dass das Foliensystem wenigstens eine Klebeschicht zur Einbettung in Umgebungen aufweist.

Durch die Gestaltung des Brandschutzmittels als Foliensystem ist es möglich, das Brandschutzmittel in einer Vielzahl von Umgebungen einzusetzen. Es eignet sich insbesondere für einen Einsatz in Gebäuden, beispielsweise innerhalb einer Brandschutzwand. Insbesondere ist es hiermit möglich, beliebige, beispielsweise auch freitragende oder gebogene architektonische Strukturen mit Brandschutzeigenschaften auszustatten.

Ein weiterer, besonders bevorzugter Einsatz des Foliensystems ist im Fahrzeugbau gegeben, wo es ein Übergreifen von Flammen wirksam verhindern kann und so die Sicherheit der Insassen erhöht. Ein Bestandteil der bevorzugten Eigenschaften des erfindungsgemäßen Brandschutzmittels ist sein geringes Gewicht, was seine Einsatzmöglichkeiten weiter erhöht.

Durch die Anpassbarkeit an verschiedene Umgebungen ist es auch möglich, andere Anforderungen zu erfüllen, beispielsweise eine freie Durchsicht durch das Brandschutzmittel zu ermöglichen. Es eignet sich hierdurch besonders für einen Einsatz in Brandschutzverglasungen. Mit Hilfe des erfindungsgemäßen Mittels ausgestaltete Brandschutzverglasungen können einfach und zuverlässig bearbeitet werden, beispielsweise durch Zuschneiden oder durch eine Kantenbearbeitung.

Eine besonders zweckmäßige Ausführungsform der Erfindung zeichnet sich dadurch aus, dass wenigstens ein Bestandteil des Foliensystems eine silikatische Basis aufweist.

Dies hat den Vorteil, dass sich sowohl eine hohe Feuerbeständigkeit als auch gute mechanische Eigenschaften erzielen lassen. Der Einsatz einer silikatischen Basis bewirkt, dass sich bereits bei verhältnismäßig geringen Gehalten organischer Additive ― vorzugsweise weniger als 10 %, insbesondere weniger als 5 % - bis hin zu 0,5 % eine gewünschte Elastizität des Brandschutzmittels erzielen lässt.

Die Variation verschiedener Eigenschaften innerhalb einer einzelnen Schicht, die beispielsweise als eine Folie laminiert werden kann, hat den Vorteil, dass sich hierdurch die Herstellbarkeit des Brandschutzmittels weiter verbessert.

Außerdem ist es hierdurch möglich, unter der Voraussetzung einer geringen Absorption im sichtbaren Bereich, eine hohe Transparenz zu erzielen.

Die Variation der Bestandteile lässt sich sowohl für den Fall einer einzelnen Schicht einsetzen, als auch für den Fall, dass es sich um mehrere, von einander verschiedene Schichten ― etwa als Folien, insbesondere laminierte Folien ― handelt.

Es ist für mehrere Anwendungsgebiete vorteilhaft, dass das Foliensystem aus mehreren Folien besteht, die wenigstens teilweise einen von einander verschiedenen Gehalt an anorganischen und/oder organischen Bestandteilen aufweisen.

Hierdurch ist es möglich, das Brandschutzmittel noch besser an verschiedene Einsatzanforderungen anzupassen, vorzugsweise, um gewünschte Eigenschaften des Brandschutzes und anderer Parameter, wie chemischer Beständigkeit oder Verbindbarkeit, mit der eingesetzten Umgebung zu erhöhen.

In einem besonders bevorzugten Ausführungsbeispiel der Erfindung besteht das Foliensystem aus mehreren Schichten, zu denen wenigstens eine Schicht (core shell model) mit hoher thermischer Stabilität mit innenliegenden Feuchtschichten gehört. Ferner ist der Einbau stärker organisch modifizierter Schichten mit höherer Elastizität zweckmäßig. Dies ist insbesondere für die Erlangung der Pendelschlagsicherheit von Brandschutzsystemen nach DIN 52 337 von Bedeutung.

Die Zusammensetzung des Foliensystems kann den unterschiedlichen Anforderungen angepasst werden, ohne dass die Verfahren der späteren Verglasungsherstellung davon grundlegend beeinflusst werden. So muss bei Änderung des Schichtaufbaus nicht der gesamte Herstellungsprozess von Brandschutzverglasungseinheiten, sondern lediglich die Herstellung der Brandschutzfolie verändert werden. Das Einbringen der Folie in die Verglasung kann nach einheitlichen Verfahren erfolgen, die üblicherweise zu Herstellung von Verbundsicherheitglas angewandt werden. Eine Integration in bestehnde VSG-Prozesse wird durch die Anpassungsfähigkeit des neuartigen Foliensystems wesentlich erleichtert.
In einem besonders bevorzugten Ausführungsbeispiel der Erfindung erfolgt die Anpassung des gesamten hybriden Brandschutzsystems an die einbettende Umgebung durch Klebeschichten. Die Adhäsionskraft der verwendeten Klebeschichten lässt sich dabei zweckmäßigerweise einstellen. Bei der Umgebung handelt es sich beispielsweise um Materialien wie Glas, Kunststoff oder dergleichen, an welche die Klebeschichten angepasst werden.

Dies hat wiederum den Vorteil, dass die Brandschutzfolie ohne Veränderung gesamter Herstellungsverfahren für Verglasungen flexibel angepasst werden kann.
Das erfindungsgemäße Foliensystem weist in einer besonders bevorzugten Ausführungsform eine hohe Flexibilität für die spätere Weiterverarbeitung auf. Die Foliensysteme sind zweckmäßigerweise jedoch dünner ausgeführt als übliche Brandschutzschichten. Durch dünne Folien wird die Handhabung der Schichten vereinfacht, und die Baugrößen und insbesondere das Gesamtgewicht der Brandschutzverglasungen können vorteilhaft reduziert werden. Trotz angestrebter geringerer Dicke müssen die Folien selbstverständlich die entsprechenden Brandlasten bewältigen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Die erfindungsgemäßen Foliensysteme lassen sich auf verschiedene Weise herstellen.

Es ist möglich, die einzelnen Bestandteile in weiten Bereichen zu variieren und die Herstellungsbedingungen zu verändern.

Es handelt sich jeweils um hybride Foliensysteme. Dies beinhaltet sowohl den Fall, dass eine Schicht aus mehreren Teilschichten mit unterschiedlichen Verhältnissen zwischen anorganischen und organischen Bestandteilen eingesetzt wird, als auch, dass eine Schicht organische und anorganische Bestandteile in variierenden Verhältnissen beinhaltet.

Der Grundgedanke, sowohl anorganische als auch organische Bestandteile zur Vereinigung der mechanischen und der brandschutzhemmenden Eigenschaften in das Brandschutzmittel einzubringen, lässt sich vielfach variieren.

Wegen der vielfältigen Variationsmöglichkeiten können die nachfolgend dargestellten Ausführungsbeispiele, beziehungsweise die hierfür eingesetzten Bestandteile und Verfahrensschritte miteinander kombiniert werden, um die jeweils gewünschten Eigenschaften zu erzielen.

Es hat sich insbesondere als zweckmäßig erwiesen, spezielle Hybridmaterialien auf silikatischer Basis zu synthetisieren, die neben der Bereitstellung der Brandschutzeigenschaften auch die wesentlichen Folieneigenschaften bei ausreichender Langzeitstabilität gewährleisten. Bei der Materialentwicklung kommen beispielsweise bekannte chemische Synthese-Techniken wie das Sol-Gel-Verfahren zur Anwendung.
Eingesetzte Chemikalien stellen beispielsweise dar: Polyole wie z.B. Ethylenglycol, Propan-1,3-diol, Butan-1,4-diol, Glycerin oder Sorbitol sowie insbesondere Polyglycerine, POSS (Polyhedral Oligomeric Silsesquioxane), Polysäuren wie z.B. Adipinsäure, Äpfelsäure, Weinsäure, Zitronensäure, Oxalsäure oder auch Borsäure, flammenpyrolytisch hergestellte Pulver wie z.B. Aluminium-, Silicium-, Zirkon- oder Titanoxid, Fällungskieselsäuren, Kieselsole, Metallhydroxide, Metallsalze wie z.B. Zirkonylchlorid und Titantetrachlorid, Metallalkoholate wie z.B. Aluminium-tri-sec-butylat, Tetrapropoxyzirkon oder Titantetraisopropylat, Metalldiketonate wie z.B. Aluminiumacetylacetonat, Silane, Siloxane, Silicone, organische Polymere wie z.B. Polyvinylalkohol, Polyvinylamin, Polyvinylsulfonat, Polyacrylate, Polycarboxylate, Polyacrylamid oder Polydimethyldiallylammoniumchlorid sowie deren monomere und oligomeren Einheiten und Copolymerisate wie z.B. Styrol-Acrylat-Copolmere, Nanopartikel wie z.B. Schichtsilikate wie z.B. Natrosilit (Na₂Si₂O₅), Makatit (Na₂Si₄O₈(OH)₂*4H₂O), Magadiit (Na₂Si₁₄O₂₉*11H₂O), Kenyait (Na₂Si₂₂O₄₅*10H₂O), Kanemit (NaHSi₂O₅*3H₂O), Revdit (Na₂Si₂O₅*5H₂O) und Grumantit (NaHSi₂O₅*0,9H₂O) und Schichtkieselsäuren wie z.B solche, die der annähernden Formel H₂Si_{2y}O_{2y+1} (y=1,2,4,7,11) und/oder Nanokomposite wie z.B. organisch modifizierte Schichtsilikate und Schichtkieselsäuren.

Besonders bevorzugte Ausführungsformen des Basissystems sind:

### 1.0 Anorganische Modifikationen des Basissystems

### 1.1 Ausführungsbeispiele zu Moduländerungen

Wie bekannt ist, bewirken Modulerhöhungen beim Aufschäumen eine Schauverfeinerung und der Schaum zeigt im Abschmelzbereich eine höhere Viskosität. Wird zur Erhöhung des Modul ein saures Kieselsol eingesetzt, so ergibt sich auch eine deutliche pH-Wert-Erniedrigung. Aus dieser resultiert eine höhere Verträglichkeit von organischen Zusätzen.
Bekannt ist auch eine höhere Sprödigkeit der resultierenden Folien nach der Trocknung.

### 1.1.1 Modulerhöhung bis 4,4:

In ein Reaktionsgefäss, versehen mit einem Magnetrührfisch, werden 100g Natrium-Wasserglas (Crystal 0075 der Fa. INEOS: molares Modul 3,31; 28,11% SiO₂; 8,76% Na₂O; pH 11,5) gegeben. Zu dem Wasserglas werden mit einem Spatel 2g Aerosil A 200 der Fa. Degussa als Feststoff zugefügt. Diese Mischung wird 48h bei 50°C in einem Wasserbad bis zur vollständigen Lösung des Aerosils A 200 gerührt. Anschließend werden 15g VE-Wasser zur Viskositätseinstellung dazugegeben.

Dann werden weitere 2g Aerosil A 200 als Feststoff dazugegeben und bei 50°C im Wasserbad für 48h bis zur vollständigen Lösung des Aerosils A 200 gerührt.

Dann werden erneut 2g Aerosils A 200 als Feststoff zugegeben und bis zur Lösung des Aerosils A 200 im Wasserbad bei 50°C gerührt. Anschließend werden 15g VE-Wasser zu der Lösung gegeben und sie wird in einem Schüttler bis zur Rührbarkeit geschüttelt.

Dann werden weitere 2g Aerosils A 200 als Feststoff zugegeben und bei 50°C im Wasserbad bis zur vollständigen Lösung des Aerosils A 200 gerührt. Anschließend werden 10g VE-Wasser zu der Lösung gegeben und sie wird in einem Schüttler bis zur Rührbarkeit geschüttelt.

Dann wird ein weiteres Gramm Aerosils A 200 als Feststoff zugegeben und bei 50°C im Wasserbad bis zur vollständigen Lösung des Aerosils A 200 gerührt.

Danach wird die Mischung auf eine Kunststofffolie (PET) aufgetragen und in einer Sauerstoffatmosphäre (Durchfluss: 100l/h) bei 80°C bis zu einer Restfeuchte von 25 % getrocknet.

Ergebnis:
Die resultierende Folie ist klar, homogen und wie zu erwarten spröde. Beim Aufschäumen ergab sie einen kompakten Schaum mit kleinen Blasen und gleichmäßiger Höhenverteilung.
FSG: 30.78 %; molares Modul 4,37; 24.91 % SiO₂; 5.88% Na₂O; pH: 10,5

### 1.1.2 Modulerhöhung bis 4,0:

In einem Reaktionsgefäss werden zu 19,96g Crystal 0075 (Natrium-Wasserglas, Na₂O: 8,32%, SiO₂: 28,11%, Feststoffgehalt: 36,43% Molares Modul 3,49, pH 11,18) in 3,5h 2,88g Klebosol 30R9 (Kolloidales Silika stabilisiert mit Natriumoxid, SiO₂: 30,4%, Na₂O: 0,7%, pH: 10,5, Radius 9nm) unter Rühren (700UPM) bei Raumtemperatur zugetropft. Während des Zutropfens steigt die Viskosität, die Flüssigkeit wird trübe. Nach 46h Rühren erhält man eine klare Lösung mit erhöhter Viskosität.

Um eine vergleichbare Viskosität zu dem Basissystem einzustellen, die anhand des Rührstrudels optisch beurteilt wird, werden folgende Zugaben von destilliertem Wasser und anschließendem Rühren vorgenommen:

| | Zugabe in g | Rührzeit in h | Lösung |
|---|---|---|---|
| 1. | 1,28 | 70 | klar |
| 2. | 1,20 | 142 | klar |
| 3. | 1,35 | | klar |

Nach der dritten Wasserzugabe tritt keine wahrnehmbare Änderung der Viskosität mehr auf.

Die analytischen Daten der entstandenen Lösung werden wie folgt bestimmt: Na₂O: 6,26%, SiO₂: 24,18%, Feststoffgehalt: 30,61%, Molares Modul: 3,96, pH: 11,13.

Die Lösung wird auf eine Kunststofffolie (PET) aufgetragen (Flächenmasse: 0,1g/cm²) und unter einer Sauerstoffatmosphäre (Durchfluss 100l/ h) bei 100°C getrocknet.

Beim Trocknen bis auf eine Restfeuchte von 25% entsteht eine klare Schicht mit wenig Rissen.

### 1.1.3 Modulerhöhung bis 4,5:

In einem Reaktionsgefäß werden zu 19,96 g Crystal 0075 (Natrium-Wasserglas, Na₂O: 8,32%, SiO₂: 28,11 %, Feststoffgehalt: 36,43% Molares Modul 3,49, pH 11,18) in 6 h 6,10 g Klebosol 30R9 (Kolloidales Silika stabilisiert mit Natriumoxid, SiO₂: 30,4%, Na₂O: 0,7%, pH: 10,5, Radius 9nm) unter Rühren (700UPM) bei Raumtemperatur zugetropft. Während des Zutropfens steigt die Viskosität, die Flüssigkeit wird trübe.
Um eine vergleichbare Viskosität zu dem Basissystem einzustellen, die anhand des Rührstrudels optisch beurteilt wird, werden folgende Zugaben von destilliertem Wasser und anschließendem Rühren vorgenommen:

| | Zugabe in g | Rührzeit in h | Lösung |
|---|---|---|---|
| 1. | | 48 | Suspension |
| 2. | 1,38 | 72 | Suspension |
| 3. | 1,27 | 144 | Gel, klar |
| 4. | 1,52 | 168 | Suspension |
| 5. | 1,31 | 216 | Suspension |
| 6. | 1,23 | 504 | klar |
| 7. | 1,32 | | klar |

Nach der letzten Wasserzugabe tritt keine wahrnehmbare Änderung der Viskosität mehr auf.

Die analytischen Daten der entstandenen Lösung werden wie folgt bestimmt:
Na₂O: 4,97%, SiO₂: 21,90%, Feststoffgehalt: 26,87%, Molares Modul: 4,55, pH: 11,02.

Die Lösung wird auf eine Kunststofffolie aufgetragen (Flächenmasse: 0,1g/cm²) und unter einer Sauerstoffatmosphäre (Durchfluss: 100 l/ h) bei 100°C getrocknet. Beim Trocknen bis zu auf eine Restfeuchte von 25 % entsteht eine klare Schicht mit Rissen.

### 1.1.4 Modulerhöhung bis 5,3:

In einem Reaktionsgefäß werden zu 20,07 g Crystal 0075 (Natrium-Wasserglas, Na₂O: 8,32%, SiO₂: 28,11%, Feststoffgehalt: 36,43% Molares Modul 3,49, pH 11,18) in 7h 11,45g Klebosol 30R9 (Kolloidales Silika stabilisiert mit Natriumoxid, SiO₂: 30,4%, Na₂O: 0,7%, pH: 10,5, Radius 9nm) unter Rühren (700UPM) bei Raumtemperatur zugetropft. Während des Zutropfens steigt die Viskosität, die Flüssigkeit wird trübe
Um eine vergleichbare Viskosität zu dem Basissystem einzustellen, die anhand des Rührstrudels optisch beurteilt wird, werden folgende Zugaben von destilliertem Wasser und anschließendem Rühren vorgenommen:

| | Zugabe in g | Rührzeit in h | Lösung |
|---|---|---|---|
| 1. | | 48 | Suspension |
| 2. | 1,60 | 72 | Suspension |
| 3. | 1,53 | 144 | Suspension |
| 4. | 1,67 | 216 | Suspension |
| 5. | 1,19 | 504 | Suspension |
| 6. | 1,45 | 865 | Suspension |

Nach der letzten Wasserzugabe tritt keine wahrnehmbare Änderung der Viskosität mehr auf.

Die analytischen Daten der entstandenen Lösung werden wie folgt bestimmt:
Na₂O: 4,27%, SiO₂: 22,09%, Feststoffgehalt: 26,36%, Molares Modul: 5,34, pH: 10,83.

Die Suspension wird auf eine Kunststofffolie (PET) aufgetragen (Flächenmasse: 0,1g/cm²) und unter einer Sauerstoffatmosphäre (Durchfluss 100l/ h) bei 100°C getrocknet.
Beim Trocknen bis zu auf eine Restfeuchte von 25% entsteht eine klare Schicht mit Rissen.

### 1.2 Ausführungsbeispiel zur Änderung des Feststoffgehaltes

Zu einer Standardlösung Na-Wasserglas wird 5% Glycerin hinzugefügt. Die Lösung hat die folgende Zusammensetzung:
SiO₂: 26,94%, Na₂O: 8,14%, Glycerin: 5,63%, Feststoffgehalt: 40,72%. Durch Zugabe von destilliertem Wasser erhält man folgende Lösungen:

| | | |
|---|---|---|
| Lösung A | Feststoffgehalt | 40,72% |
| Lösung B | Feststoffgehalt | 38,17% |
| Lösung C | Feststoffgehalt | 35,63% |
| Lösung D | Feststoffgehalt | 33,07% |
| Lösung E | Feststoffgehalt | 30,53% |

Diese Lösungen werden unter einer Sauerstoffatmosphäre (Durchfluss 100 l/h) bei einer Temperatur von 100°C bis zu auf eine Restfeuchte von 25% getrocknet. Von den entstandenen Folien wird die Punktbelastung bestimmt.

### Punktbelastung

Zur Beurteilung der mechanischen Belastbarkeit werden die Folien in einer Vorrichtung einer punktuellen, senkrecht zur Oberfläche wirkenden Belastung ausgesetzt.
Die Folie wird in einen kreisrunden Rahmen (d=70mm) eingespannt.

Die Belastung erfolgt zentriert mittels eines Stempels, der mit Gewichten (diskrete Massen) beschwert werden kann.
Das auf die Folie drückende Ende des Stempels ist als Halbrund ausgeführt (d=32mm).

Zur Messung der Dehnung wird unterhalb der Folie, ebenfalls zentriert, ein Stempel bewegt. Dieser ist am Ende, das an der Folie anliegt, als Halbrund ausgeführt (d=3mm).

Die zurückgelegte Wegstrecke wird über eine mit dem Stempel verbundene Messuhr (Skalierung auf 0,01 mm) registriert.

Das für die Messergebnisse geltende Kriterium ist Materialversagen als Funktion von beaufschlagte Masse, Dehnung und der Belastungszeit. (Unterschiedliche Verlaufscharakteristiken für zähe, duktile bzw. spröde Folien.).
Die untenstehende Tabelle zeigt die Ergebnisse:

**Tabelle**

| Einfluss des Feststoffgehaltes auf die Punktbelastung | | | | | |
|---|---|---|---|---|---|
| Lösung | % Feststoffgehalt | % Restfeuchte Folie | sₘₐₓ mm | mₘₐₓ g | sₘₐₓ/mₘₐₓ *10⁻³ |
| A | 40,72 | 24,91 | 2,62 | 706,5 | 3,7 |
| B | 38,17 | 24,37 | 3,09 | 1406,5 | 2,2 |
| C | 35,63 | 26,18 | 3,35 | 806,5 | 4,2 |
| D | 33,07 | 25,68 | 4,35 | 806,5 | 5,4 |
| E | 30,53 | 25,23 | 5,35 | 606,5 | 8,8 |

Aus den Ergebnissen folgt, dass sich die Dehnung sₘₐₓ bei verringerndem Feststoffgehalt vergrößert. Wird als Maß für die mechanischen Eigenschaften der Quotient aus sₘₐₓ und mₘₐₓ herangezogen, so ergibt sich ein Optimum zwischen 35-40% FSG.

### 1.3 Veränderung der stofflichen Zusammensetzung; Einbringen von Elementen und ihren Verbindungen, die hochschmelzende Oxide bilden

Zur Verbesserung der thermischen Stabilität der Brandschutzfolie in der Hochtemperaturphase eines Brandfalles ist der glastechnische Umbau von niedrigschmelzenden Na-Silikatsystemen erforderlich. Dadurch lassen sich dünne und hochleistungsfähige Brandschutzsysteme herstellen.

Ein großes Problem bei der Herstellung von Brandschutzschichten stellen in stark alkalischen Basissystemen Ausfällungen von Hydroxid- bzw. Oxidphasen wichtiger glasbildender bzw. glaswandelnder Elemente dar. In einem besonders bevorzugten Ausführungsbeispiel der Erfindung werden daher Schichtsilikate und Schichtkieselsäuren als "trojanische Pferde" für den Einbau hochschmelzender Oxide von Elementen der 2./3. Hauptgruppe (HGr) des Periodensystems der Elemente (PSE) und 4. Nebengruppe (NGr) des PSE, beispielsweise Mg, Ca, Ti, Zr und/oder Al eingesetzt.
Überraschenderweise zeigte sich, dass das Einbringen mehrwertiger Kationen in Alkalisilikatlösungen - ohne die bekannte und technisch z.B. mit Ca²⁺-Ionen zur Bodenverfestigung genutzte bzw. mit Al³⁺-Ionen zur Herstellung von Zeoliten angewandte sofortige Ausfällung unlöslicher Silikatverbindungen - gelingt, wenn diese über den Weg ihres Einbaus in Schichtsilikaten, bevorzugt nanopartikulären Aufbaus eingebracht, werden.
Auch der Einbau organischer Verbindungen ist mit Hilfe dieser Schichtsilikate möglich, da u.a. quarternäre Ammoniumverbindungen mit organischen Restfunktionen angebunden bzw. eingelagert und so zusätzlich in die Matrix mit eingebunden werden können. Dadurch werden alle Möglichkeiten organischer Polymerchemie zur Herstellung von Brandschutzfoliensysteme bereitgestellt und nutzbar gemacht.

### Untersuchungen zum Schmelzverhalten

Um das Schmelzverhalten der Brandschutzschichten positiv zu beeinflussen, d.h. einen bei höheren Temperaturen schmelzenden, viskoseren Schaum zu erzeugen, ist es vorteilhaft, hochschmelzende Oxide, wie z.B. ZrO₂, CaO, MgO, Al₂O₃, (allgemein: Elemente der 2./3. HGr PSE, 4. NGr PSE), in die Brandschutzfolien einzubringen.
In einem bevorzugten Anwendungsbeispiel erfolgt die Einbringung von MgO über ein Magnesiumschichtsilikat der Firma Rockwood (Produktgruppe Laponite). Theoretische Berechnungen nach Lakatos zeigen, dass die Viskosität eines Standardwasserglases (SiO₂: 28%, Na₂O: 8,3%) durch Zusatz von 5,3% Laponite RD im Temperaturbereich von 700 °C bis 1000 °C um ca. 5% ansteigt.
Dieses Verhalten konnte durch Laboruntersuchungen nach der Halbkugelpunktmethode bestätigt werden. So erhöht sich der Halbkugelpunkt des Mg-dotierten Wasserglases im Vergleich zum reinen Wasserglas um 20 °C.

### 1.3.1 Mg-Trisilikat

In 6 Erlenmeyerkolben (01-06) mit Schliff, versehen mit Rührfischen, werden je 22,5g Crystal 0075 eingewogen.
Unter Rühren (500UPM) werden in drei Erlenmeyerkolben Mg-Trisilikat MS15 und in die anderen drei verschiedene Massen Mg-Trisilikat MS33 gegeben (siehe Tabelle unten).

**Tabelle:**

| Zugabe von verschiedenen Mengen Mg-Trisilikat | | | | |
|---|---|---|---|---|
| Nr. | Crystal 0075 in g | MS15 in g | MS33 in g | Folie |
| 01 | 22,53 | 0,23 | - | klar + |
| 02 | 22,61 | 0,70 | - | trüb |
| 03 | 22,51 | 1,18 | - | trüb |
| 04 | 22,45 | - | 0,23 | klar + |
| 05 | 22,30 | - | 0,70 | trüb |
| 06 | 22,50 | - | 1,18 | trüb |

Die Mischungen werden für 20h bei STP in verschlossenen Erlenmeyerkolben zur Homogenisierung gerührt.

Die Mischungen werden auf eine Kunststofffolie (PET) aufgetragen und bis zu einer Restfeuchte von 20-25% in einer Sauerstoffatmosphäre (Durchfluss: 100l/h) bei 80°C getrocknet (Flächenmasse 0,14g/cm²).
Die erhaltenen Folien mit geringen Gehalten an Mg-Trisilikat bleiben klar und ohne Trübung. Die Einführung von gewissen Mengen Magnesium ist somit z.B. über diesen Weg möglich.

### 1.3.2 Schichtsilikate, Schichtkieselsäuren

Die Kristallisation der verschiedenen Schichtsilikate erfolgt in Abhängigkeit vom gewünschten Produkt entweder hydrothermal oder wasserfrei. Der Herstellungsprozess hat Auswirkungen auf die Strukturbildung, den Vernetzungsgrad und die Porosität, was das Eigenschaftsbild der Substanzen prägt.
Der Zusatz geringer Mengen von Fremdelementen, wie z.B. Bor, Aluminium, Phosphor u.a., kann Auswirkungen auf die Kristallisation und das Eigenschaftsbild der erhaltenen Produkte haben.
Wichtige Eigenschaften der Schichtsilikate und Schichtkieselsäuren sind die Möglichkeit, dass sie als Trägermaterialien für katalytische Prozesse geeignet sind und sie eine ausgeprägte Intercalation aufweisen.
Unter Intercalation ist ein Quellen der Schichtstrukturen zu verstehen, bei dem sich Moleküle zwischen den einzelnen Schichten ein- bzw. anlagern.
So sind verschiedene organische Moleküle in der Lage, sich zwischen die Schichten der kristallinen Silikate einzulagern. Dabei werden häufig die Zwischenwassermoleküle verdrängt und der erhöhte Platzbedarf führt zu einer Schichtaufweitung des Silikats. Die vom Kenyait (H₂Si₂₂O₄₅*xH₂O)und Magadiit (H₂Si₁₄O₂₉*xH₂O) abgeleiteten Schichtkieselsäuren erweisen sich dabei als besonders reaktionsfreudig für eine Vielzahl von Substanzen. So lagern sich z.B. kationische Tenside unter Schichtaufweitung im Magadiit ein, während anionische und nichtionische Tenside nur auf der externen Oberfläche gebunden sind.

Neben ihrer Funktion als "Trojanische Pferde" zeigen Schichtsilikate und Schichtkieselsäuren weitere wichtige Eigenschaftsänderungen, so beispielsweise eine Thixotropierung der Sole, was wichtig für die Auftragstechnik ist, eine Verringerung der Trockenzeit, verbesserte mechanische Eigenschaften, eine verbesserte Oberflächengüte, bessere und homogenere Aufschäumergebnisse, sowie ein verbessertes Verhalten im Hochtemperaturbereich.

In einem Brandversuch in Anlehnung an DIN 4102 zeigte eine rein anorganische, nur mit Schichtsilikaten modifizierte Brandschutzeinheit eine erheblich längere Standzeit bei 980°C als ein parallel dazu getestetes kommerziell erhältliches Brandschutzglas. Hervorzuheben ist insbesondere die thermische Stabilität des Brandschaumes des mit Schichtsilikaten modifizierten Brandschutzsystemes, der im Gegensatz zu einem nur organisch modifizierten kommerziellen Alkalisilikat-Brandschutzsystem auch bei sehr hohen Temperaturen nicht zusammenschmolz und noch ausreichende thermische und mechanische Stabilität besaß. Dadurch konnte wesentlich länger als mit dem bestehenden System der Raumabschluss gewährleistet werden.
Zusätzlich kann durch Einbau von mit Phosphorverbindungen modifizierten Schichtsilikaten das Aufschäumverhalten des Brandschutzfoliensystems im niederen und mittleren Temperaturbereich positiv beeinflusst werden. Durch die Ausbildung einer sehr feinen und homogenen Schaumstruktur wird die thermisch isolierende Wirkung verstärkt und ein homogenes Bruchbild erzeugt. Dadurch können in der Praxis wirksamere und haltbarere Brandschutzsysteme hergestellt werden.

### 1.3.2.1 Thixotropie

### Lösung A:

In einen Erlenmeyerkolben, versehen mit Rührfisch, werden 65,73g VE-Wasser eingewogen.
Anschließend werden unter Rühren (1250UPM) bei STP 7,32g Laponite RDS in kleinen Mengen zugegeben.

Die Mischung wird für 5min bei STP mit einem Dispergator (24000UPM) homogenisiert und anschließend für 1 h bei STP auf einem Magnetrührer (1250UPM) weiter homogenisiert, die Mischung wird klar.

### Lösung B:

In einen Erlenmeyerkolben, versehen mit Rührfisch, werden 16,90g vom Basissystem eingewogen.
Das Basissystem ist ein Alkali-Wasserglas mit einem molaren Modul zwischen 3,3-3,5 und organischen Additiven bis 6%, dessen Feststoffgehalt auf 37,5% eingestellt ist.

Anschließend werden unter Rühren (500UPM) bei STP 16,96g von Lösung A innerhalb von 10min zugetropft.

Die Lösung B wird im verschlossenen Erlenmeyerkolben für 8d bei STP weitergerührt (350UPM), die Lösung ist nun thixotrop.

### 1.3.2.2 Einfluss auf die Trockenzeit, die Foliendicke, die mechanische Belastbarkeit und die Schaumstruktur

### Lösungen A:

In 3 Erlenmeyerkolben (01-03), versehen mit Rührfisch, wird VE-Wasser eingewogen.

Anschließend werden unter Rühren (1250UPM) bei STP verschiedene Massen Laponite RDS in kleinen Mengen zugegeben.
Die Mischung wird für 5min bei STP mit einem Dispergator (24000UPM) homogenisiert und anschließend für 1h bei STP auf einem Magnetrührer (1250UPM) weiter homogenisiert, die Mischung wird klar.

| Nr. | VE-Wasser in g | Laponite RDS in g |
|---|---|---|
| 01 | 32,51 | 0,74 |
| 02 | 32,80 | 2,36 |
| 03 | 32,65 | 3,99 |

### Lösungen B:

In 4 Erlenmeyerkolben (04-07), versehen mit Rührfisch, wird Basissystem eingewogen.
Anschließend werden unter Rühren (500UPM) bei STP verschiedene Massen der Lösungen A innerhalb von 5min in kleinen Mengen zugetropft.

| Nr. | Basissystem in g | Lösung A01 in g | Lösung A02 in g | Lösung A03 in g |
|---|---|---|---|---|
| 04 | 135,16 | 30,06 | - | - |
| 05 | 135,05 | - | 30,51 | - |
| 06 | 135,03 | - | - | 30,00 |
| 07 | 138,82 | - | - | - |

Die Lösungen B werden in verschlossenen Erlenmeyerkolben für 5d bei STP gerührt (500UPM).

Aus jeder der Lösungen B werden auf eine Kunststofffolie (PET) aufgetragen und je 5 Folien hergestellt. Die Trocknung erfolgt in einer Sauerstoffatmosphäre (Durchfluss: 100l/h) bei 80°C bis zu einer Restfeuchte von 25-28% (Flächenmasse 0,14g/cm²).

Je zwei Folien aus jeder der Lösungen B werden innerhalb einer Zeitspanne von 16-18h nach der Herstellung auf Punktbelastung geprüft.

Eine Folie jeder Mischung wird einseitig und eine beidseitig auf bzw. zwischen
Float-Glas (4*110*110mm) laminiert.
Die Laminierungen erfolgen unter erhöhtem Druck bei 80°C in 20h.

Die laminierten Verbünde werden in einem auf 200°C vorgeheizten Trockenschrank für 30min gelagert, wobei die Aufschäumung erfolgt.

Die Foliendicke wird an 5 Stellen (in den vier Ecken und in der Mitte) mit einer Messuhr (Skalierung 0,01 mm) gemessen und gemittelt.

Es wird die Schaumstruktur bewertet sowie die Aufschäumhöhe der beidseitig laminierten Verbünde gemessen.

### Ergebnisse:

**Tabelle:**

| Ergebnisse der Versuche mit Schichtsilikaten für die Trockenzeit, die mechanischen Eigenschaften, die Foliendicke | | | | | | |
|---|---|---|---|---|---|---|
| Nr. | Restfeuchte in % | Trockenzeit in min | sₘₐₓ in mm | mₘₐₓ in g | sₘₐₓ/mₘₐₓ *10⁻³ | Mittl. Foliendicke in mm |
| 04 | 25,8-28,2 | 450 | 3,94 | 1000 | 3,94 | 0,74 |
| 05 | 24,6-26,7 | 420 | 2,61 | 500 | 5,22 | 0,80 |
| 06 | 26,1-26,5 | 405 | 2,00 | 300 | 6,66 | 0,82 |
| 07 | 24,8-25,4 | 450 | 3,28 | 400 | 8,20 | 0,74 |

**Tabelle:**

| Ergebnisse der Versuche mit Schichtsilikaten für das Aufschäumverhalten | | | |
|---|---|---|---|
| Nr. | Mittlere Aufschäumhöhe in mm | Schaumgüte (visuelle Bewertung) | Folien |
| 04 | 9,03 | 0 | klar |
| 05 | 8,36 | **+** | klar |
| 06 | 7,98 | **+ +** | klar |
| 07 | 9,19 | **-** | klar |

Die erhaltenen Folien sind klar. Mit zunehmendem Gehalt an Schichtsilikat nimmt die Trockenzeit ab und die mittlere Foliendicke etwas zu. Die mechanischen Eigenschaften, gemessen am Quotienten sₘₐₓ/mₘₐₓ, sind mit Schichtsilikatzusatz durchweg besser als ohne.
Der beim Aufschäumen entstehende Schaum zeigt die deutliche Tendenz, dass je höher der Schichtsilikatanteil ist, desto feiner und kompakter ist der Schaum; resultierend daraus ist die Aufschäumhöhe geringer.
Neben der besseren thermisch-isolierenden Eigenschaft eines feineren Schaums ist die verringerte Aufschäumhöhe in soweit wünschenswert, dass das beim Aufschäumen durch die mechanische Arbeit hervorgerufene Zerspringen/Zerbrechen des Glases weniger heftig erfolgt. Die entstehenden Glasschollen sind kleiner und bleiben auf dem entstehenden Brandschutzschaum kleben.
Durch das Abspringen von Glasschollen und Bereiche mit grobem Schaum/großen Blasen wird die Standzeit stark verringert, es kommt früh zu Durchbränden, die thermisch-isolierende Wirkung ist lokal aufgehoben und der Raumabschluß ist nicht mehr gegeben. Bei der Verbrennung entstehende meist toxische Produkte werden nicht mehr abgehalten.

### 1.3.2.1 Synärese

### Lösungen A:

In 3 Erlenmeyerkolben (01-03), versehen mit Rührfisch, wird VE-Wasser eingewogen.

Anschließend werden unter Rühren (1250UPM) bei STP verschiedene Massen Laponite RDS in kleinen Mengen zugegeben.
Die Mischung wird für 5min bei STP mit einem Dispergator (24000UPM) homogenisiert und anschließend für 1 h bei STP auf einem Magnetrührer (1250UPM) weiter homogenisiert, die Mischung wird klar.

| Nr. | VE-Wasser in g | Laponite RDS in g |
|---|---|---|
| 01 | 117,59 | 1,18 |
| 02 | 113,76 | 2,32 |
| 03 | 112,41 | 3,50 |

### Lösungen B:

In 3 Erlenmeyerkolben (04-06), versehen mit Rührfisch, wird Basissystem eingewogen.

Anschließend werden unter Rühren (500UPM) bei STP verschiedene Massen der Lösungen A innerhalb von 5min in kleinen Mengen zugetropft.

| Nr. | Basissystem in g | Lösung A01 in g | Lösung A02 in g | Lösung A03 in g |
|---|---|---|---|---|
| 04 | 20,40 | 20,41 | - | - |
| 05 | 20,40 | - | 20,39 | - |
| 06 | 20,39 | - | - | 20,41 |

Die Lösungen B werden in verschlossenen Erlenmeyerkolben für 2h bei STP gerührt (500UPM).
Aus jeder der Lösungen B werden auf eine Kunststofffolie aufgetragen und je 1 Folie hergestellt. Die Trocknung erfolgt in einer Sauerstoffatmosphäre (Durchfluss: 100l/h) bei 80°C bis zu einer Restfeuchte von 32-36% (Flächenmasse 0,14g/cm²).

Eine Folie jeder Mischung wird einseitig auf Float-Glas (4*110*110mm) laminiert.

Die Laminierungen erfolgen unter erhöhtem Druck bei 80°C in 20h.

Die laminierten Verbünde werden in einem auf 200°C vorgeheizten Trockenschrank für 30min gelagert, wobei die Aufschäumung erfolgt.

Ergebnisse:

**Tabelle:**

| Ergebnisse von Schichtsilikatversuchen zum Synärese-Effekt | | | | | |
|---|---|---|---|---|---|
| Nr. | Restfeuchte in % | Trockenzeit in min | Schaumgüte (visuelle Bewertung) | Oberflächengüte (visuelle Bewertung) | Folien |
| 04 | 35,9 | 315 | 0 | **- -** | klar |
| 05 | 32,73 | 315 | **+** | **-** | klar |
| 06 | 32,41 | 315 | **+ +** | **+** | klar |

Die erhaltenen Folien sind klar. Die Oberflächengüte wird mit zunehmendem Gehalt von Schichtsilikaten zu.

### 1.3.3 Einbringen von Zirkon

### Lösung A:

In einen Erlenmeyerkolben, versehen mit einem Rührfisch, werden der Reihe nach 79,39g abs. Ethanol und 10,42g TEOS eingewogen.
Unter Rühren (500RPM) werden 9,0g VE-Wasser Tropfenweise aus einer Einwegpipette innerhalb von 5min zugegeben. Anschließend wird für 2,5h bei STP weitergerührt (500RPM), das TEOS wird hydrolysiert.

### Lösung B:

In einen Erlenmeyerkolben, versehen mit einem Rührfisch, werden der Reihe nach 79,41 g abs. Ethanol und 23,52g Tyzor ZEC eingewogen.
Unter Rühren (500RPM) werden 9,0g VE-Wasser Tropfenweise aus einer Einwegpipette innerhalb von 5min zugegeben.
Die Lösung wird im Wasserbad bei 40°C für 80min gerührt (200RPM); die Lösung beginnt sich zu trüben.

### Lösung C:

In ein Reaktionsgefäss, versehen mit einem Rührfisch, werden 2,5ml von Lösung B gegeben. Unter Rühren (1250RPM) bei STP werden 10ml von Lösung A innerhalb von 5min zugetropft.
Anschließend lässt man die Lösung C für 125min bei STP weiterreagieren.

In 4 Erlenmeyerkolben, versehen mit Rührfischen, wird Basissystem eingewogen. Unter Rühren (500RPM) bei STP werden verschiedene Massen von Lösung C innerhalb von 5min zugetropft und anschließend werden die Mischungen für 17,5h bei STP gerührt (350RPM).
Zu den Mischungen 03 und 04 wird VE-Wasser zugegeben, alle Mischungen werden bei STP für 14d gerührt (350RPM).

| Nr. | Basissystem in g | Lösung C in g | VE-Wasser in g | Folie |
|---|---|---|---|---|
| 01 | 22,65 | 0,22 | - | milchig |
| 02 | 22,27 | 0,45 | - | milchig |
| 03 | 22,82 | 0,73 | 5,14 | klar |
| 04 | 22,65 | 1,18 | 5,05 | teilweise klar |

Die Mischungen werden auf eine Kunststofffolie aufgetragen und bis zu einer Restfeuchte von 27-29% in einer Sauerstoffatmosphäre (Durchfluss: 100l/h) bei 80°C getrocknet (Flächenmasse 0,14g/cm²).

Eine der erhaltenen Folien ist klar. Dies zeigt, dass die Möglichkeit besteht, über den beschriebenen Syntheseweg Zirkon in gewissen Mengen in das System einzuführen und transparente Produkte zu erhalten.

### 1.3.4 Einbringen von Bor:

### Borax

In zwei Erlenmeyerkolben, versehen mit Rührfischen, wird Crystal 0075 eingewogen.
Das Borax wird unter Rühren (300RPM) in kleinen Mengen innerhalb von 5min zugegeben.

Die Mischungen werden für 10d bei STP zur Homogenisierung gerührt (300RPM).

| Nr. | Crystal 0075 in g | Borax in g | Homogenisierungszeit in Tagen | Folie |
|---|---|---|---|---|
| 01 | 30,07 | 0,30 | 10 | klar |
| 02 | 30,06 | 0,93 | 10 | klar |

Die Lösungen werden auf einer Kunststofffolie in einer Sauerstoffatmosphäre (Durchfluss: 100l/h) bei 80°C bis zu einer Restfeuchte von 18% getrocknet (Flächenmasse 0,14g/cm²).

Die erhaltenen Folien sind klar. Bor kann in gewissen Mengen in das System eingeführt werden, ohne die Transparenz der Produkte zu beeinträchtigen.

### 1.4 Na/K Verhältnis

Der Zusatz von Kalium hat positive Auswirkungen auf die Homogenisierung der Schaumstruktur, die Verbesserung der mechanischen Eigenschaften und die Reduzierung der Trockenzeit.

### Herstellung der Na-WG-Lösungen:

### Lösung A:

In eine gläserne Schliffflasche werden 450g Crystal 0075 eingewogen.
Anschließend werden 120g VE-Wasser zugegeben und für 1d unter Rühren (500UPM) bei STP homogenisiert.

### Lösung B:

In einen Erlenmeyerkolben werden 360g Crystal 0075 eingewogen.
Anschließend werden 80g VE-Wasser zugegeben und für 1d unter Rühren (500UPM) bei STP homogenisiert.

### Lösung C:

Zur Lösung A werden 425g von Lösung B gegeben und für 1d unter Rühren (500UPM) bei STP homogenisiert.

### Herstellung der K-WG-Lösung:

### Lösung D:

In einen Erlenmeyerkolben werden nacheinander 82g KOH-Plättchen, 50g VE-Wasser und 270g Klebosol 30R25 eingewogen.
Die Mischung wird im verschlossenen Erlenmeyerkolben für 20h bei STP gerührt, die Lösung wird farblos und klar.

### Herstellung der verschiedenen Mixed-Alkali-WG:

In sieben mit Rührfisch versehenen Erlenmeyerkolben (01-07) werden die verschieden Mixed-Alkali-WG gemischt.
Es wird Lösung C in die Erlenmeyerkolben eingewogen und anschließend wird Lösung D zugegeben (siehe Tabelle unten).

Zu allen Mischungen werden unter Rühren (300UPM) bei STP innerhalb von 5min mit Einwegpipetten 6,5g Glycerin zugetropft und sie werden anschließend unter Rühren (300UPM) bei STP homogenisiert.

| Nr. | Masse Lösung C in g | Masse Lösung D in g | Zeit bis Folienherstellung in Tagen |
|---|---|---|---|
| 01 | 170 | 0 | 5 |
| 02 | 161,5 | 9 | 47 |
| 03 | 153 | 17 | 42 |
| 04 | 127,5 | 42,5 | 40 |
| 05 | 85 | 86 | 21 |
| 06 | 42,5 | 127,5 | 20 |
| 07 | 0 | 170 | 19 |

Aus jeder der Mischungen werden 4 Folien hergestellt.
Die Mischungen werden auf einer Kunststofffolie aufgetragen und in einer Sauerstoffatmosphäre (Durchfluss: 100l/h) bei 80°C bis zu einer Restfeuchte von 25% getrocknet. (Ausnahme: 7 ist bis auf eine Restfeuchte von 15-20%getrocknet worden.)

Alle Folien werden innerhalb einer Zeitspanne von 16-18h nach der Herstellung auf Punktbelastung geprüft.

Eine Folie jeder Mischung wird einseitig und eine beidseitig auf bzw. zwischen Float-Glas (4*110*110mm) laminiert.
Die Laminierungen erfolgen unter erhöhtem Druck bei 80°C in 20h.

Die laminierten Verbünde werden in einem auf 200°C vor geheizten Trockenschrank für 30min gelagert, wobei die Aufschäumung erfolgt.

Es wird die Schaumstruktur visuell bewertet

### Ergebnisse:

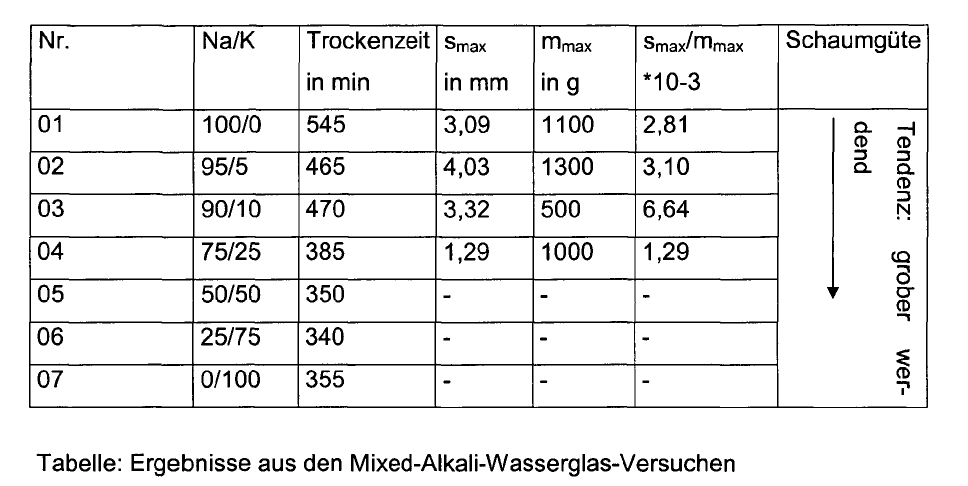

Mit zunehmendem Gehalt an Kalium nimmt die Trockenzeit ab. Bis 25% Kalium zeigt sich eine Zunahme der Homogenität des entstehenden Schaums.

### 2.0 Organische Modifikationen des Basissystems

Organische Modifikationen können bewirken, dass das sehr spröde silikatische 3D-Netzwerk durch ein organisches Teilnetzwerk oder durch große, sperrige organische Moleküle (spacer) teilweise aufgelockert wird, was bessere mechanische Eigenschaften bewirkt. Auch können sie durch die Veränderung der chemischen Zusammensetzung die Trocknung der Schichten insoweit beeinflussen, dass sie homogener und/oder schneller verlaufen kann (siehe auch organisch modifizierte Schichtsilikate) und die Nachkondensation und deren Auswirkungen (z.B. Synärese) verringert werden.

Einige der organischen Modifikationen dienen auch als Homogenisierer. Sie ermöglichen ein Ankoppeln der organischen an die anorganische Phase (z.B. MTEOS, TEOS, GPTS).

### 2.1 Einführung von Glycerin.

### 2.1.1 Trockenzeit

In ein Reaktionsgefäß werden 25,52g Crystal 0075 (Natrium-Wasserglas, Na₂O: 8,32%, SiO₂: 28,11%, Feststoffgehalt: 36,43% Molares Modul 3,48, pH 11,18) vorgelegt. Bei Raumtemperatur werden verschiedene Mengen Glycerin zugetropft. Es wird gerührt bis klare Lösungen entstanden ist. Diese werden auf eine Kunststofffolie (PET) aufgetragen (Flächenmasse: 0,1g/cm²) und auf 25% Restfeuchte unter Luftatmosphäre bei einer Temperatur von 80°C getrocknet.

Die folgende Tabelle zeigt die Ergebnisse bei Variation des Glycerin-Gehaltes:

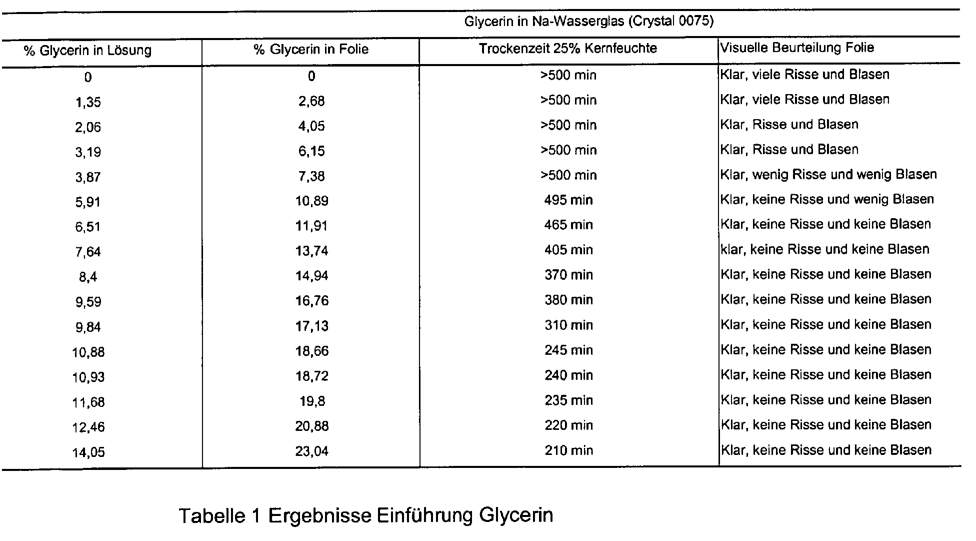

Es stellt sich heraus, dass das Glycerin eine Verbesserung der Oberfläche ergibt, es entstehen weniger Risse und Blasen. Weiter stellt sich heraus, dass sich die Trockenzeit verringert. Vermutlich kommt dies durch die Verzögerung der Hautbildung an der Oberfläche des Schichtsystems, wo das sich vernetzende Silikatsystem eine Diffusionssperrschicht ausbildet.

### 2.1.2 Mechanische Eigenschaften

In 5 Erlenmeyerkolben, versehen mit Rührfisch, wird ein Basissystem eingewogen.

Anschließend wird unter Rühren (400UPM) bei STP wasserfreies Glycerin mit Einwegpipetten in 5min zugetropft.
Anschließend wird für 20h bei STP zum Homogenisieren gerührt (500UPM).

| Nr. | Basissystem in g | Glycerin in g |
|---|---|---|
| 01 | 127,59 | 1,29 |
| 02 | 127,82 | 3,95 |
| 03 | 126,42 | 6,68 |
| 04 | 124,89 | 9,40 |
| 05 | 111,57 | 11,03 |

Aus jeder der Lösungen werden auf einer Kunststofffolie je 4 und auf Kunststofffolien je 2 Folien hergestellt. Die Trocknung erfolgt in einer Sauerstoffatmosphäre (Durchfluss: 100l/h) bei 80°C bis zu einer Restfeuchte von 24,6-28,4% (Flächenmasse 0,14g/cm²).

Die auf der Kunststofffolie getrockneten Folien werden innerhalb einer Zeitspanne von 16-18h nach der Herstellung auf Punktbelastung geprüft.

Die Foliendicke wird an 5 Stellen (in den vier Ecken und in der Mitte) mit einer Mikrometerschraube gemessen und der Wert gemittelt.

Bei der getrockneten Folien wird der Haze-Wert an 4 Stellen gemessen.

### Ergebnisse:

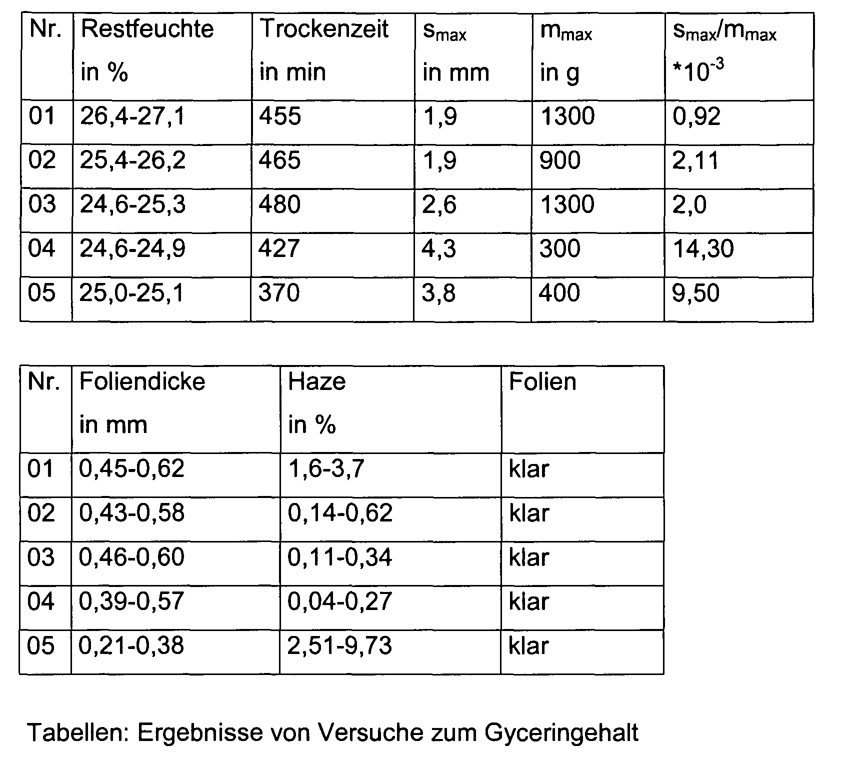

Die Folien sind klar. Mit zunehmendem Glyceringehalt nimmt die Trockenzeit ab und die Oberflächengüte verbessert sich. Für die Dehnung ergibt sich ein Optimum zwischen 10-15%.

### 2.2 Einführung von MTEOS:

In ein Reaktionsgefäß werden 20,00g Crystal 0075 (Natrium-Wasserglas, Na₂O: 8,32%, SiO₂: 28,11%, Feststoffgehalt: 36,43% Molares Modul 3,48, pH 11,18) vorgelegt. Anschließend werden 0,21g MTEOS (Trimethoxymethylsilan) zugetropft. Die entstehende Emulsion wird bei Raumtemperatur gerührt (700UPM). Nach 10min steigt die Viskosität und nach 2h ist ein Gel entstanden. Nach 17h Rühren ist keine Änderung aufgetreten. Zu dem Gel werden unter Rühren 3,98g VE-Wasser gegeben. Aus dem Gel entsteht über eine Emulsion eine klare Lösung, die stark nach MTEOS riecht. Die Lösung wird auf eine Kunststofffolie aufgetragen (Flächenmasse: 0,07g/pro cm²) und unter Sauerstoffatmosphäre bei einer Temperatur von 100°C bis auf einen Restfeuchte von 25% getrocknet. Die entstandene Folie ist klar, hat aber viele Risse und Blasen.

In ein Reaktionsgefäß werden 19,98g Crystal 0075 (Natrium-Wasserglas, Na₂O: 8,32%, SiO₂: 28,11%, Feststoffgehalt: 36,43% Molares Modul 3,48, pH 11,18) gebracht. Anschließend werden 1,01 g Glycerin zugetropft. Es wird bei Raumtemperatur gerührt (700UPM) bis eine klare Lösung entstanden ist. Zu der entstandenen Lösung werden 0,20g MTEOS (Trimethoxymethylsilan) zugetropft, wobei eine Emulsion entsteht. Diese wird bei Raumtemperatur gerührt (700UPM). Nach 10min steigt die Viskosität und nach 2h ist kein Strudel mehr zu sehen, es ist eine Lösung entstanden. Nach 17h Rühren ist keine Änderung aufgetreten. Zu der Lösung werden 4,04g VE-Wasser gegeben. Die Viskosität der Lösung sinkt, die Lösung ist klar und riecht stark nach MTEOS.

Die Lösung wird auf eine Kunststofffolie aufgetragen (Flächenmasse: 0,07g/cm²). Es wird bei 100 °C unter einer Sauerstoffatmosphäre bis auf eine Restfeuchte von 25% getrocknet.
Die entstandene Folie ist klar, hat keine Risse und wenig Blasen.

Die folgende Tabelle 2 zeigt die Ergebnisse bei Variation des Gehaltes an MTEOS:

**Tabelle 2**

| Ergebnisse Einführung MTEOS | | | | |
|---|---|---|---|---|
| MTEOS in Na-Wasserglas (Crystal 0075) | | | | |
| % MTEOS in Lösung | % MTEOS in Folie | Restfeuchte Film | Modul | Visuelle Beurteilung |
| 0,00 | 0,00 | 25,45 % | 3,48 | Risse und viele Blasen |
| 0,87 | 2,09 | 25,97 % | 3,51 | Risse und viele Blasen |

| MTEOS in Na-Wasserglas (Crystal 0075) + 5% Glycerin | | | | |
|---|---|---|---|---|
| % MTEOS in Lösung | % MTEOS in Folie | Restfeuchte Film | Modul | Visuelle Beurteilung |
| 0,00 | 0,00 | 25,56 % | 3,48 | Wenig Blasen |
| 0,79 | 1,82 | 25,86 % | 3,50 | Wenig Blasen |
| 1,60 | 3,67 | 24,65 % | 3,52 | Wenig Blasen |
| 2,83 | 6,14 | 25,01 % | 3,54 | Blasen |
| 3,92 | 9,15 | 24,32 % | 3,56 | Cluster und Blasen |

Die Versuche zeigen, dass die Zugabe von Glycerin die Einführung von MTEOS vereinfacht. Die Sprödigkeit nimmt ab.

### 2.3 Einführung von TEOS:

In ein Reaktionsgefäß werden 19,98 g Crystal 0075 (Natrium-Wasserglas, Na₂O: 8,32%, SiO₂: 28,11%, Feststoffgehalt: 36,43% Molares Modul 3,48, pH 11,18) gebracht. Anschließend werden 0,21g TEOS (Tetraethylorthosilikat) zugetropft, wobei eine Emulsion entsteht. Es wird bei Raumtemperatur 17h gerührt (700UPM). Unter Rühren werden zu dem entstandenen Gel 3,99g VE-Wasser gegeben. Die entstehende Lösung ist klar und riecht schwach nach TEOS.

Die Lösung wird auf eine Kunststofffolie aufgetragen (Flächenmasse: 0,07g/cm²) und unter Sauerstoffatmosphäre bei einer Temperatur von 100°C bis auf eine Restfeuchte von 25% getrocknet.
Die entstandene Folie ist klar, hat aber viele Risse und Blasen.

In ein Reaktionsgefäß werden 20,03g Crystal 0075 (Natrium-Wasserglas, Na₂O: 8,32%, SiO₂: 28,11%, Feststoffgehalt: 36,43% Molares Modul 3,48, pH 11,18) gebracht. Anschließend werden 1,02g Glycerin zugetropft. Es wird bei Raumtemperatur gerührt bis eine klare Lösung entstanden ist. Zur entstandenen Lösung werden 0,22g TEOS (Tetraethylorthosilikat) zugetropft, wobei eine Emulsion entsteht. Es wird bei Raumtemperatur gerührt (700UPM). Nach 10min steigt die Viskosität und nach 2h ist kein Strudel mehr zu sehen, es ist eine Lösung entstanden. Nach 17h Rühren ist keine Änderung aufgetreten. Zu der Lösung werden 4,00g VE-Wasser gegeben. Die Viskosität der Lösung sinkt und der Rührstrudel ist wieder zu sehen. Die Lösung ist klar und riecht schwach nach TEOS.

Die Lösung wird auf eine Kunststofffolie aufgetragen (Flächenmasse: 0,07g/cm²) und unter Sauerstoffatmosphäre bei einer Temperatur von 100°C bis auf eine Restfeuchte von 25% getrocknet. Die entstandene Folie ist klar, hat keine Risse und wenig Blasen.

Die folgende Tabelle 3 zeigt die Ergebnisse bei Variation des Gehaltes an TEOS:

**Tabelle 3**

| Ergebnisse Einführung TEOS | | | | |
|---|---|---|---|---|
| TEOS in Na-Wasserglas (Crystal 0075) | | | | |
| % TEOS in Lösung | % TEOS in Folie | Restfeuchte Film | Modul | Visuelle Beurteilung |
| 0,00 | 0,00 | 25,45 % | 3,48 | Risse und viele Blasen |
| 0,87 | 2,10 | 25,81 % | 3,50 | Risse und viele Blasen |

| TEOS in Na-Wasserglas (Crystal 0075) + 5% Glycerin | | | | |
|---|---|---|---|---|
| % TEOS in Lösung | % TEOS in Folie | Restfeuchte Film | Modul | Visuelle Beurteilung |
| 0,00 | 0,00 | 25,56 % | 3,48 | Keine Risse, wenig Blasen |
| 0,89 | 2,04 | 24,47 % | 3,50 | Keine Risse, wenig Blasen |
| 1,71 | 3,91 | 24,65 % | 3,52 | Keine Risse, wenig Blasen |
| 2,83 | 6,30 | 25,34 % | 3,54 | Cluster und Blasen |

Die Versuche zeigen, dass die Zugabe von Glycerin die Einführung von TEOS vereinfacht. Die Sprödigkeit nimmt ab.

### 2.4.1 Einführen von GPTS (Glycidoxypropyltrimethoxysilan):

In ein Reaktionsgefäss, versehen mit einem Magnetrührfisch, werden nacheinander 10g Wasser, 5g wasserfreies Glycerin und 10g GPTS der Fa. ABCR gegeben. Diese Mischung wird 24h in einem Wasserbad bei 40°C gerührt.

Danach werden 100g Natrium-Wasserglas (Crystal 0075 der Fa. INEOS: molares Modul 3,31; 28,11 % SiO₂; 8,76% Na₂O; pH 11,5) dazugegeben.

Diese Mischung wird bei 40°C in einem Wasserbad bis zur vollständigen Homogenisierung gerührt, die Lösung wird klar.

Danach wird die Mischung auf eine Kunststofffolie aufgetragen und in einer Sauerstoffatmosphäre (Durchfluss: 100l/h) bei 80°C bis zu einer Restfeuchte von 25% getrocknet.

Die resultierende Folie war klar und homogen und wies einige wenige kleine Blasen auf.
(FSG: 41.49 %: molares Modul 3,60; 7,01% Na₂O; 24,48% SiO₂; 5.2% C)

### 2.4.2 Variationen bei der Einführung von GPTS:

In ein Reaktionsgefäß werden 19,98 g Crystal 0075 (Natrium-Wasserglas, Na₂O: 8,32%, SiO₂: 28,11%, Feststoffgehalt: 36,43% Molares Modul 3,48, pH 11,18) gebracht. Anschließend werden 0,21 g GPTS ([3-(2,3-Epoxypropoxy)-propyltrimethoxysilane) zugetropft, wobei eine Emulsion entsteht. Nach 3 h Rühren bei Raumtemperatur (700 UPM) ist keine Veränderung eingetreten. Es werden 4,00 g destilliertes Wasser hinzugefügt und nach 17 h Rühren ist eine klare Lösung entstanden.

Die Lösung wird auf eine Kunststofffolie aufgetragen (Flächenmasse: 0,07g/cm²) und unter Sauerstoffatmosphäre bei einer Temperatur von 100°C bis auf eine Restfeuchte von 25 % getrocknet.
Die entstandene Folie ist klar, hat wenig Risse und wenig Blasen.

In ein Reaktionsgefäß werden 20,04g Crystal 0075 (Natrium-Wasserglas, Na₂O: 8,32%, SiO₂: 28,11%, Feststoffgehalt: 36,43% Molares Modul 3,48, pH 11,18) gebracht. Anschließend wird 1,00g Glycerin zugetropft. Es wird bei Raumtemperatur gerührt (700UPM) bis eine klare Lösung entstanden ist. Zur entstandenen Lösung werden unter Rühren 0,21g GPTS ([3-(2,3-Epoxypropoxy)-propyltrimethoxysilane) zugetropft, wobei eine Emulsion entsteht. Nach 10min Rühren (700UPM) bei Raumtemperatur ist eine Lösung entstanden, die sich auch nach 17h Rühren nicht mehr verändert. Zu dieser Lösung werden 4,01 g VE-Wasser zugefügt.

Die klare Lösung wird auf eine Kunststofffolie aufgetragen (Flächenmasse: 0,07g/cm²) und unter Sauerstoffatmosphäre bei einer Temperatur von 100°C bis auf eine Restfeuchte von 25 % getrocknet.
Die entstandene Folie ist klar, hat kleine Risse und wenig Blasen
Die folgende Tabelle 4 zeigt die Ergebnisse bei Variation des Gehaltes an GPTS:

**Tabelle 4**

| Ergebnisse Einführung GPTS | | | | |
|---|---|---|---|---|
| GPTS in Na-Wasserglas (Crystal 0075) | | | | |
| % GPTS in Lösung | % GPTS in Folie | Restfeuchte Folie | Modul | Visuelle Beurteilung |
| 0,00 | 0,00 | 24,75 % | 3,48 | Kleine Risse und Blasen |
| 0,86 | 2,09 | 24,84 % | 3,50 | Kleine Risse und Blasen |
| 1,67 | 3,99 | 27,11 % | 3,51 | Viele Risse und Blasen |
| 2,51 | 5,72 | 25,66 % | 3,52 | Viele Risse und Blasen |

| GPTS in Na-Wasserglas (Crystal 0075) **+** 5% Glycerin | | | | |
|---|---|---|---|---|
| % GPTS in Lösung | % GPTS in Folie | Restfeuchte Folie | Modul | Visuelle Beurteilung |
| 0,00 | 0,00 | 25,13 % | 3,48 | Wenig Blasen |
| 0,44 | 1,02 | 25,66 % | 3,49 | Wenig Blasen |
| 0,82 | 1,89 | 25,95 % | 3,50 | Wenig Blasen |
| 1,60 | 3,57 | 26,98 % | 3,52 | Wenig Blasen |
| 2,33 | 4,86 | 26,54 % | 3,53 | Wenig Blasen |
| 3,11 | 6,69 | 27,24 % | 3,54 | Wenig Blasen |
| 3,85 | 8,49 | 24,13 % | 3,55 | Cluster und Blasen |

### 2.5 Einführung von Tensiden

Das Einführen von Tensiden (anionischen, kationischen, amphoteren und nichtIonischen) führt unter anderem zur Veränderung der Oberflächenspannungen der zusammenspielenden Komponenten. Dies hat positive Auswirkungen auf z.B. die Benetzbarkeit des Substrats, die Entgasung der Sole sowie die Trockenzeit. Diese erwarteten Beeinflussungen des Systems konnten bei Vertretern aller vier Tensid-Klassen beobachtet werden. Beispiele für anionische Tenside sind Sulfetal LS(C) und Sulfetal 4105(C), für kationische Tenside QMS 435(A), für amphotere Tenside Amphotensid D1(C), Amphotensid EH(C) und Tegotens DO(B) und für nicht-ionische Tenside DBE 814(A), DBE 821 (A), DBE 712(A), DBE 621 (A), DBE 732(A), DBP 534(A), CMS 626(A), Tegotens G826(B), Tegopren 5847(B), Zusolat 1008/85(C), Propetal 340(C), Propetal 99(C) und Oxytal 500/85 (C) (A) Lieferant ABCR, (B) LieferantDegussa/Goldschmidt, (C) Lieferant Zschimmer & Schwartz

In einem besonderen Ausführungsbeispiel werden klare Folien für den Einsatz in transparenten Brandschutzsystemen erhalten.

In einem Reaktionsgefäß werden 25,74g Crystal 0075 (Natrium-Wasserglas, Na₂O: 8,32%, SiO₂: 28,11%, Feststoffgehalt: 36,43% Molares Modul 3,48, pH 11,18) vorgelegt. Anschließend werden 0,13g Tegotens G826 zugetropft. Tegotens G826 (2-Ethylhexylglucosid) ist ein nicht-ionisches Tensid. Nach Hinzufügen von Tegotens G826 entsteht sofort eine klare Lösung. Nach 70h Rühren (600UPM) bei Raumtemperatur ist eine Emulsion entstanden. Die Emulsion wird auf eine Kunststofffolie aufgebracht (0,1g Feststoffgehalt pro cm²). Es wird unter Luftatmosphäre bei 80°C bis auf eine Restfeuchte von 25% getrocknet.
Die entstandene Folie ist klar, hat fast keine Risse und wenig Blasen.

Der gleiche Versuch wird mit einer höheren Konzentration Tegotens G826 durchgeführt, die Ergebnisse zeigt Tabelle 5.
In einem Reaktionsgefäß werden 1,29g Glycerin eingewogen. Es werden 0,14g Tegotens G826 unter Rühren zugetropft. Tegotens G826 (2-Ethylhexylglucosid) ist ein nicht-ionisches Tensid. Die Mischung wird 1 h bei Raumtemperatur gerührt. Zu der Mischung werden 25,50g Crystal 0075 (Natrium-Wasserglas, Na₂O: 8,32%, SiO₂: 28,11%, Feststoffgehalt: 36,43% Molares Modul 3,48, pH 11,18) unter Rühren gegeben, wobei eine Emulsion entsteht. Nach 70h Rühren (600UPM) bei Raumtemperatur ist eine klare Lösung entstanden. Die Lösung wird auf eine Kunststofffolie aufgebracht (Flächenmasse: 0,1g/cm²). Es wird unter Luftatmosphäre bei 80°C bis auf eine Restfeuchte von 25% getrocknet. Die entstandene Folie ist klar, hat fast keine Risse und wenig Blasen.

Der gleiche Versuch wird mit einer höheren Konzentration Tegotens G826 durchgeführt, die Ergebnisse zeigt Tabelle 5.

**Tabelle 5**

| Ergebnisse Einführung Tegotens G826 | | | |
|---|---|---|---|
| Tegotens G826 in Na-Wasserglas (Crystal 0075) | | | |
| % Tegotens in Lösung | % Tegotens in Folie | Restfeuchte Folie | Visuelle Beurteilung |
| 0,52 | 1,05 | 25,32 % | Kleine Risse und Blasen |
| 1,04 | 2,10 | 25,41 % | Kleine Risse und Blasen |

| Tegotens G826 in Na-Wasserglas (Crystal 0075) **+** 5% Glycerin | | | |
|---|---|---|---|
| % Tegotens in Lösung | % Tegotens in Folie | Restfeuchte Folie | Visuelle Beurteilung |
| 0,53 | 0,99 | 25,13 % | Wenig Blasen |
| 1,05 | 1,96 | 25,66 % | Wenig Blasen |

### 2.5 Einführung von POSS (Polyhedral Oligomeric Silsesquioxane):

In ein Reaktionsgefäß, versehen mit einem Magnetrührfisch, werden 100g Natrium-Wasserglas (Crystal 0075 der Fa. INEOS: molares Modul 3,31; 28,11% SiO₂; 8,76% Na₂O; pH 11,5) gegeben.

Zu dem Wasserglas werden mit einer Pasteurpipette 5g wasserfreies Glycerin getropft. Anschließend wird diese Mischung bei 40°C im Wasserbad 2h homogenisiert.

Zu der homogenisierten Mischung werden mit einem Spatel 1g OCTA-TMA-POSS (C₃₂H₉₆O₂₀Si₈·60 H₂O) der Fa. Hybrid Plastics als Feststoff zugegeben. Die Mischung wird 72h bei 40°C im Wasserbad gerührt.

Danach wird die Mischung auf eine Kunststofffolie aufgetragen und in einer Sauerstoffatmosphäre (Durchfluss: 100l/h) bei 80°C bis zu einer Restfeuchte von 25 % getrocknet.
(FSG: 40.44 %; molares Modul 3,33; 8.26% Na₂O, 26,71 % SiO₂; 1,84% C; 0.04% N)
Die erhaltenen Folien zeigten keine Trübung. Das Einführen von Poss als Spacer in das silikatische Netzwerk ist möglich.

Zur Herstellung der erfindungsgemäßen Folie werden vorzugsweise spezielle Materialien als Hilfs-, Trenn- und Schutzfolie verwendet. Die Auftragsverfahren zum Aufbringen der intumeszierenden Materialien in das Foliensystem hängen von den rheologischen Parametern ab. Durch die Auftragsverfahren ergibt sich vorteilhafterweise eine geringe Dicketoleranz.

Ein kontinuierliches Verfahren zur Herstellung von Foliensystemen weist verschiedene Vorteile auf. Durch Online-Kontrolle kann beispielsweise eine gleichbleibende Produktqualität gewährleistet werden. Es ergibt sich ferner eine hohe Ausbeute. Vorteilhaft ist außerdem, dass sich Nass- und Trockenfilmdicken leicht variieren lassen. Durch spezielle Konditionierungsverfahren ergeben sich in x, y und z-Richtung geringe Gradienten der chemischen Zusammensetzung z.B. der Kernfeuchte und damit eine homogene Schaumbildung und ein sicheres Brand- und Alterungsverhalten. Die Konditionierungszeiten können durch Variation des Schichtsystems und der Konditionierungsparameter sowie durch den Einsatz von DCCA's (drying control chemical additives) und weiteren Additiven erheblich gesenkt werden.

Die Prozesszeiten können vorteilhafterweise durch kaskadierende Beschichtungsprozesse und Dünnfilmtrocknung gesenkt werden.

Durch leichte Änderungen des Folientyps kann das hybride Foliensysten gezielt an spezielle Brandschutzanforderungen angepasst werden. Durch das erfindungsgemäße Mehrschichtfoliensystem werden ferner Inhomogenitäten der chemischen Zusammensetzung und damit der physikalischen Eigenschaften über die Gesamtdicke und ―breite vermieden und positive Eigenschaftskombinatonen im Hinblick auf optimalen Raumanschluss, thermische Isolation, lange Standzeit und hohe Haltbarkeit gezielt einstellen. Dies stellt einen weiteren großen Vorteil gegenüber 1-Schichtsystemen dar, da es flexibel herstellbare und reproduzierbare Brandschutz- und Alterungseigenschaften mit sich bringt. Aufwändige Nachkonditionierungen, beispielsweise durch künstliche thermische Alterung, werden dadurch ebenfalls vermieden.

Definierte Gradienten wie beispielsweise Feuchtegradienten, aber auch Gradienten anderer Parameter über die Schichtdicke, können eingestellt werden, was wiederum zu einem definierenden Brandverhalten führt. Das Aufschäumverhalten der erfindungsgemäßen Brandschutzschicht im Brandfall ist demnach weitaus voraussehbarer als bei herkömmlich hergestellten Brandschutzschichten. Auch Alterungs-, Isolations- und Abschmelzverhalten lassen sich dadurch besser definieren.
Zur Herstellung des hybriden Foliensystems kommen beispielsweise Techniken wie die 2-Kammertrocknung mit semipermeabler Folie, deren Pereabilität für die einzelnen Prozessgase optimal einstellbar ist und getrennte Gasführung in Betracht. Dadurch lassen sich die Gaszusammensetzung sowie die Strömungsverhältnisse variieren und somit die Prozesszeit verkürzen und die Qualität des Produktes verbessern.

## Patentansprüche

1. Brandschutzmittel zur Einbettung in ein Bauelement, **dadurch gekennzeichnet, dass** das Brandschutzmittel wenigstens ein hybrides Foliensystem umfasst, bei dem wenigstens eine Folie mit intumeszierendem Material beschichtet ist.

2. Brandschutzmittel nach Anspruch 1, **dadurch gekennzeichnet, dass** das Foliensystem wenigstens eine Schicht mit hoher Elastizität aufweist.

3. Brandschutzmittel nach einem oder mehreren der vorangegangenen Ansprüche, **dadurch gekennzeichnet, dass** das Foliensystem wenigstens eine Klebeschicht zur Einbettung in Umgebungen aufweist.

4. Brandschutzmittel nach einem oder mehreren der vorangegangenen Ansprüche, **dadurch gekennzeichnet, dass** das Foliensystem im sichtbaren Bereich transparent ist.

5. Brandschutzmittel nach einem oder mehreren der vorangegangenen Ansprüche, **dadurch gekennzeichnet, dass** wenigstens ein Bestandteil des Foliensystems eine silikatische Basis aufweist.

6. Brandschutzmittel nach einem oder mehreren der vorangegangenen Ansprüche, **dadurch gekennzeichnet, dass** das Foliensystem wenigstens eine Schicht enthält, bei der ein Gehalt von anorganischen und/oder organischen Bestandteilen über die Dicke der Schicht variiert.

7. Brandschutzmittel nach einem oder mehreren der vorangegangenen Ansprüche, **dadurch gekennzeichnet, dass** das Foliensystem aus mehreren Folien besteht, die wenigstens teilweise einen von einander verschiedenen Gehalt an anorganischen und/oder organischen Bestandteilen aufweisen.

8. Brandschutzmittel, zur Einbettung in ein Bauelement, **dadurch gekennzeichnet, dass** das Brandschutzmittel mindestens zwei mindestens in Teilen transparente chemisch unterschiedlich zusammengesetzte Folien bzw. Folienschichten enthält, wobei wenigstens eine der Schichten feuerhemmend ausgestaltet ist.

9. Brandschutzfolie auf Silikat-Basis, **dadurch gekennzeichnet, dass** das molare Modul, ein molares Verhältnis zwischen SiO₂ und Na₂O, zwischen 2,0 und 6,5 vorzugsweise 3 - 5,0 aufweist.

10. Brandschutzfolie auf Silikat-Basis, **dadurch gekennzeichnet, dass** sie hochschmelzende Oxide bzw. deren Vorstufen enthält.

11. Brandschutzfolie gemäß Anspruch 10, **dadurch gekennzeichnet, dass** die hochschmelzenden Oxide in Form von Schichtsilikaten vorliegen.

12. Brandschutzfolie auf Silikat-Basis, **dadurch gekennzeichnet, dass** sie Laponite enthält.

13. Brandschutzmittel herstellbar nach einem kontinuierlichen, kaskadierenden Verfahren, bei dem zunächst eine Folie oder Folienschicht A aufgebracht wird und auf diese eine weitere Folie oder Folienschicht B aufgetragen wird, sowie gegebenenfalls eine weitere/weitere Folie/n und/oder Folienschicht/en C aufgetragen wird/werden, **dadurch gekennzeichnet, dass** mindestens zwei der Folien Folienschichten A, B und C chemisch unterschiedlich zusammengesetzt sind, und mindestens eine der Folienschichten A, B oder C feuerhemmend ist.

14. Brandschutzmittel nach einem der Ansprüche 8 oder 13, **dadurch gekennzeichnet, dass** mindestens eine der feuerhemmenden Folien/Folienschichten eine Zusammensetzung nach einem der Ansprüche 9 bis 12 aufweist.

15. Brandschutzmittel nach einem der Ansprüche 8 oder 13, **dadurch gekennzeichnet, dass** mindestens eine der Folien/Folienschichten bei einer Restfeuchte zwischen 15% und 35%
a) zwischen 0,5% und 25%, vorzugsweise zwischen 7 % und 23 % insbesondere zwischen 10 und 23 %, insbesondere zwischen 12 und 23 % Glycerin enthält, oder
b) 1,5 bis 5% MTEOS oder
1,5 bis 5% TEOS oder
1,0 bis 7,5% GPTS oder
0,5 bis 2,5% Tensid, insbesondere TEGOTEN, enthält
c) bei zwischen 4% und 6% Glyceringehalt
1,5 bis 5% MTEOS oder
1,5 bis 5% TEOS oder
1,0 bis 7,5% GPTS oder
0,5 bis 2,5% Tensid, insbesondere TEGOTEN, enthält.

16. Brandschutzverglasung, **dadurch gekennzeichnet, dass** sie wenigstens ein Brandschutzmittel nach einem oder mehreren der Ansprüche 8 oder 13 oder eine Brandschutzfolie gemäß einem der Ansprüche 9 bis 12 aufweist.

17. Verfahren zur Herstellung eines hybriden transparenten Brandschutzfoliensystems, **dadurch gekennzeichnet, dass** das Foliensystem in einem kontinuierlichen Verfahren hergestellt wird.

18. Verfahren nach Anspruch 17, **dadurch gekennzeichnet, dass** das Verfahren kaskadierende Beschichtungsprozesse umfasst.

19. Verfahren nach einem oder beiden der Ansprüche 7 und 8, **dadurch gekennzeichnet, dass** das Verfahren eine Dünnfilmtrocknung umfasst.

20. Brandschutzverglasung, **dadurch gekennzeichnet, dass** sie wenigstens ein Brandschutzmittel nach einem oder mehreren der Ansprüche 1 bis 15. aufweist.
